# EUROPÄISCHE PATENTSCHRIFT

(11) **EP 1 749 161 B1**
(45) Veröffentlichungstag und Bekanntmachung des Hinweises auf die Patenterteilung: **23.07.2008**
(21) Anmeldenummer: 05734135.6
(22) Anmeldetag: 28.04.2005
(51) Int. Cl.: F16H 61/02

(54) **VERFAHREN ZUR STEUERUNG EINES AUTOMATISIERTEN SCHALTGETRIEBES**
METHOD FOR CONTROLLING AN AUTOMATIC TRANSMISSION
PROCEDE DE COMMANDE D'UNE BOITE DE VITESSES

(30) Priorität: 03.05.2004 DE 102004021801
(43) Veröffentlichungstag der Anmeldung: 07.02.2007
(73) Patentinhaber: ZF FRIEDRICHSHAFEN Aktiengesellschaft, 88038 Friedrichshafen (DE)
(72) Erfinder: WIENCEK, Norbert, 88709 Hagnau (DE); VESENJAK, Andelko, 88074 Meckenbeuren (DE); JÄGER, Thomas, 88074 Meckenbeuren (DE); STEINBORN, Mario, 88046 Friedrichshafen (DE); CORDT, Ramon, 88046 Friedrichshafen (DE); HERTER, Peter, 88212 Ravensburg (DE)
(86) Internationale Anmeldenummer: PCT/EP2005/004532
(87) Internationale Veröffentlichungsnummer: WO 2005/108827

(56) Entgegenhaltungen:
- DE-A1- 4 312 717
- DE-A1- 19 752 623
- US-A- 5 519 610
- BAUKNECHT G ET AL: "DAS NEUE FUNFGANG-AUTOMATIKGETRIEBE FUR DIE UBERARBEITETEN BMW ACHTZYLINDERMOTOREN" ATZ AUTOMOBILTECHNISCHE ZEITSCHRIFT, FRANCKH., STUTTGART, DE, Bd. 98, Nr. 10, Oktober 1996 (1996-10), Seiten 508-514,516,51, XP000629647 ISSN: 0001-2785

## Beschreibung

Die Erfindung betrifft ein Verfahren zur Steuerung eines automatisierten Schaltgetriebes gemäß dem Oberbegriff der Patentansprüche 1 und 2.

Automatisierte Schaltgetriebe werden seit geraumer Zeit in unterschiedlichen Kraftfahrzeugtypen genutzt. Bekanntermaßen wird bei solchen Automatgetrieben bevorzugt die Betätigung der Anfahr- und/oder Schaltkupplung ebenso wie das Auswählen der Schaltgassen sowie das Ein- und Auslegen von Getriebegängen mit Hilfe von druckmittelbetätigbaren Aktuatoren realisiert, welche üblicherweise als Kolben-Zylinder-Anordnungen ausgebildet sind. Demgegenüber sind aber auch Kraftfahrzeuge bekannt, bei denen nur die Anfahr- und Schaltkupplung oder nur diejenigen Getriebeelemente hilfskraftbetätigbar sind, welche zur Auswahl und zum Ein- bzw. Auslegen des Getriebegangs notwendig sind. Die Betätigung der genannten Aktuatoren wird von einem Getriebesteuerungsgerät mit Hilfe von Steuerungs- und Regelungsprogrammen kontrolliert, welche Informationen beispielsweise über die Fahrsituation, die Schaltsituation sowie den Leistungswunsch des Fahrzeugführers zu Kuppel- und Schaltbefehlen verarbeiten.

Wenngleich diese Getriebe im Vergleich zu anderen Automatgetriebetypen, wie etwa stufenlos übersetzende Umschlingungsgetriebe oder Stufenautomatgetriebe auf Planetengetriebebasis, einfach und kostengünstig aufgebaut sind, weisen die automatisierten Schaltgetriebe während eines Schaltvorgangs systembedingt eine Zugkraftunterbrechung auf, die insbesondere Fahrer von Personenfahrzeugen als unkomfortabel empfinden. Aber auch bei der Nutzung derartiger Automatgetriebe in Nutzfahrzeugen kann sich diese Zugkraftunterbrechung als nachteilig oder zumindest als komfortmindernd erweisen, wenn beispielsweise ein schwer beladener Lastkraftwagen an einer Straßenkreuzung einen die Fahrgeschwindigkeit nur sehr langsam aufbauenden Anfahrvorgang durchführt.

Dem Fachmann ist auch bekannt, dass sich ein Übersetzungsänderungsablauf in einem automatisierten Schaltgetriebe grob in drei Phasen einteilen lässt. Diese sind ausgehend von einem im Fahrzustand befindlichem Fahrzeug zunächst der Lastabbau im bisher genutzten Getriebegang sowie das Öffnen der Anfahr- und Schaltkupplung, wodurch die Drehmomentübertragung von dem Fahrzeugmotor zu dem Getriebe unterbrochen wird. Sodann erfolgt das Anwählen der neuen Gangposition bzw. Schaltgasse und das Einlegen der für den neuen Getriebegang notwenigen Getriebeelemente, wonach dann die Kupplung geschlossen wird und ein erneuter Lastaufbau erfolgt.

In all diesen Schaltphasen wird das Antriebsmoment des Fahrzeugs abweichend vom eigentlichen Fahrerwunsch beeinflusst, welcher sich selbstverständlich einen zugkraftunterbrechungsfreien Fahrzeugvortrieb wünscht. Das primäre Ziel eines in der Getriebeentwicklung tätigen Fachmanns ist es daher, die notwenige Schaltzeit für jede dieser Schaltphasen so kurz wie möglich zu fassen. Demgegenüber verursacht eine zeitlich sehr kurze Schaltung durch die damit einhergehenden schnellen Drehmomentänderungen aber auch eine Verminderung des Schaltkomforts sowie eine stärkere mechanische Belastung der an dem Schaltvorgang beteiligten Getriebebauteile. Aus den genannten Gründen ist die in einem automatisierten Schaltgetriebe tatsächlich realisierte Schaltzeit immer ein Kompromiss zwischen widerstreitenden Interessen hinsichtlich einer möglichst kurzen Schaltzeit, eines möglichst hohen Schaltkomforts sowie möglichst geringen Bauteilbelastungen.

Der Erfindung liegt die Erkenntnis zugrunde, dass ein Teil dieser die tatsächliche Schaltzeit beeinflussenden Faktoren keine Konstanten sind, sondern abhängig sind von der jeweiligen Fahrsituation, der individuellen Fahrzeugkonfiguration bei einem vorgegebenen Fahrzeugtyp sowie von den unterschiedlichen Fahretwünschen hinsichtlich Komfort und Schaltgeschwindigkeit. Rein theoretisch ergibt sich daher aus den einen optimalen Schaltablauf beeinflussenden Größen eine für ein diesbezügliches Steuerungs- und Regelungsprogramm sinnvoll nicht mehr beherrschbare Anzahl von anzuwenden Kombinationen, die letztlich zu vielen unterschiedlichen Schaltabläufen mit individuellen Schaltzeilen, Bauteilbelastungen und Schaltkomfort führen würden.

Zudem besteht bei Getriebeherstellern von unterschiedlichen Typen automatisierter Schaltgetriebe unter Kosteneinsparungsgesichtspunkten der Wunsch, ein für alle diese Getriebetypen einheitliches Steuerungs- und Regelungsprogramm zu entwickeln, welches den jeweiligen Fahrzeugtyp, dessen Nutzungsart sowie individuelle Fahrsituationen und Fahrerwünsche berücksichtigt.

Hierzu ist aus der US-A-5 519 610 ein Verfahren zur Steuerung eines automatisierten Schaltgetriebes bekannt geworden, bei dem für die Auswahl sowie das Ein- und Auslegen der Getriebegänge bestimmte Getriebeelemente, in Abhängigkeit von jeweils vorliegenden und die Fahrsituation sowie den Leistungswunsch des Fahrers repräsentierenden Größen, mittels Aktuatoren betätigt werden, die von einer Steuerungs- und Regelungsvorrichtung angesteuert werden. Das Verfahren umfasst dabei die Nutzung eines neuronales Netzwerkes.

Aus der DE-A 43 12 717 der Anmelderin ist ein Verfahren zur Steuerung eines automatischen Schaltgetriebes bekannt geworden, bei dem mindestens eine der Größen Wählhebelaktivität, Motormomentüberschuß, Kurvenradius und Bremsaktivität eine fahreraktivitätsabhängige Kenngröße festlegen. Die Eingangsgrößen sind dabei gewichtet. Zusätzlich zu dieser ersten Kenngröße wird eine zweite Kenngröße als eine fahrzustandsabhängige Kenngröße aus den Fahrzuständen Stadtverkehr, Hängerbetrieb und Bergfahrt bestimmt. Aus den beiden Kenngrößen werden dann Schaltkennfelder ermittelt.

Vor diesem Hintergrund liegt der Erfindung die Aufgabe zugrunde, ein Verfahren zur Steuerung eines automatisierten Schaltgetriebes vorzustellen, mit welchem in Abhängigkeit von den genannten Einflussfaktoren, wie etwa Fahrzustand, Fahrzeugkonfiguration und Leistungswunsch des Fahrers, ein situationsgerechter und hinsichtlich seiner Dauer, des Schaltkomforts und der Bauteilbelastungen optimaler Schaltvorgang mit einem automatisierten Schaltgetriebe durchführbar ist. Dieses Verfahren soll zudem dazu geeignet sein, ohne große Änderungen in Getriebesteuergeräten unterschiedlicher Typen von automatisierten Schaltgetrieben genutzt zu werden.

Die Lösung dieser Aufgabe ergibt sich aus den Merkmalen der Ansprüche 1 und 2, während vorteilhafte Ausgestaltungen und Weiterbildungen der Erfindung den Unteransprüchen entnehmbar sind.

Der Erfindung beruht auf dem Grundgedanken, dass sich aus der Vielzahl der einen Schaltvorgang bestimmenden oder beeinflussenden Größen nur wenige Schaltablauftypen bilden lassen, die in einem diesbezüglichen Steuerungs- und Regelungsprogramm die Schaltdauer, den Schaltkomfort und die Bauteilbelastungen bei einem Übersetzungsänderungsvorgang des Automatgetriebes bestimmen. Diese Schaltablauftypen schränken den Erfüllungsgrad hinsichtlich der unterschiedlichen Anforderungen nur wenig ein, so dass im Ergebnis optimal an die jeweiligen Verhältnisse angepasste Schaltvorgänge bzw. optimal kurze und komfortable Schaltabläufe zu verzeichnen sind.

Demnach geht die Erfindung aus von einem Verfahren zur Steuerung eines automatisierten Schaltgetriebes, bei dem eine Anfahr- und/oder Schaltkupplung und/oder für die Auswahl sowie das Ein- und Auslegen der Getriebegänge bestimmte Getriebeelemente in Abhängigkeit von der jeweils vorliegenden und die Fahrsituation sowie den Leistungswunsch des Fahrers repräsentierende Größen mittels Aktuatoren betätigt werden, die von einer Steuerungs- und Regelungsvorrichtung angesteuert werden.

Zur Lösung der gestellten Aufgabe sind gemäß einer ersten Verfahrensvariante folgende Verfahrensschritte vorgesehen:
- Erfassen von den Schaltvorgang beeinflussenden Eingangsgrößen,
- Normieren der Eingangsgrößen zu normierten Eingangsgrößen,
- Gewichtung der normierten Eingangsgrößen mit Gewichtungsfaktoren,
- Summieren der normierten und gewichteten Eingangsgrößen,
- Summieren und/oder Multiplizieren der normierten und gewichteten Eingangsgrößen zu einer Zwischengröße,
- Klassifizierung der Zwischengröße in einen von mehreren vorbestimm ten Wertebereichen, die jeweils einen Schaltablauftyp repräsentieren,
- Durchführung des Schaltvorgangs durch Betätigung der Aktuatoren mit Hilfe der dem ermittelten Schaltablauftyp zugeordneten Aktuatorsteue rungsgrößen und/oder Regelungsalgorithmen.

Durch diese Vorgehensweise wird erreicht, dass die Aktuatoren für die Kupplungsbetätigung und/oder für den Wähl- und Schaltvorgang in Abhängigkeit von Größen gesteuert und/oder geregelt werden, die nicht nur von der Fahrsituation und dem Leistungswunsch des Fahrers abhängen, sondern die außerdem den Fahrzeugtyp sowie dessen Nutzungsart berücksichtigen. Dadurch kann dieses Verfahren kostensparend als Programmmodul in verschiedenen Getriebesteuerungsgeräten für unterschiedliche automatisierte Schaltgetriebe genutzt werden.

Gemäß einer zweiten Verfahrensvariante sind die nachfolgenden Verfahrensschritte vorgesehen:
- Erfassen von den Schaltvorgang beeinflussenden Eingangsgrößen,
- Normieren der Eingangsgrößen zu normierten Eingangsgrößen,
- Gewichtung der normierten Eingangsgrößen mit Gewichtungsfaktoren,
- Summieren der normierten und gewichteten Eingangsgrößen,
- Summieren und/oder Multiplizieren der normierten und gewichteten Eingangsgrößen zu einer Zwischengröße,
- Nutzung der Zwischengröße als Veränderungsfaktor, der mit Aktua torsteuerungsgrößen und/oder Regelungsalgorithmen zur Betätigungs ansteuerung von wenigstens einem der Aktuatoren verknüpft wird,
- Durchführung des Schaltvorgangs durch Betätigung des wenigstens einen Aktuators mit Hilfe der durch den Veränderungsfaktor angepass ten Aktuatorsteuerungsgrößen und/oder Regelungsalgorithmen.

Auch dieses Verfahren verfügt über die gleichen Vorteile wie die erstgenannte Verfahrensvariante, jedoch wird hier die genannte Zwischengröße direkt mit Aktuatorsteuerungsgrößen und/oder Regelungsalgorithmen verknüpft, wodurch sich Speicherkapazität und gegebenenfalls auch Rechenzeit in einem Getriebesteuerungsgerät einsparen lässt.

Anhand der beigefügten Zeichnung lässt sich die Erfindung gut verdeutlichen. In dieser zeigen
- Fig. 1: einen schematisierten Datenflussplan für ein Datenverarbeitungsprogramm eines Getriebesteuergeräts gemäß einer ersten Verfahrensvariante, und
- Fig. 2: eine Abbildung wie in Fig. 2, jedoch für eine zweite Verfahrensvariante.

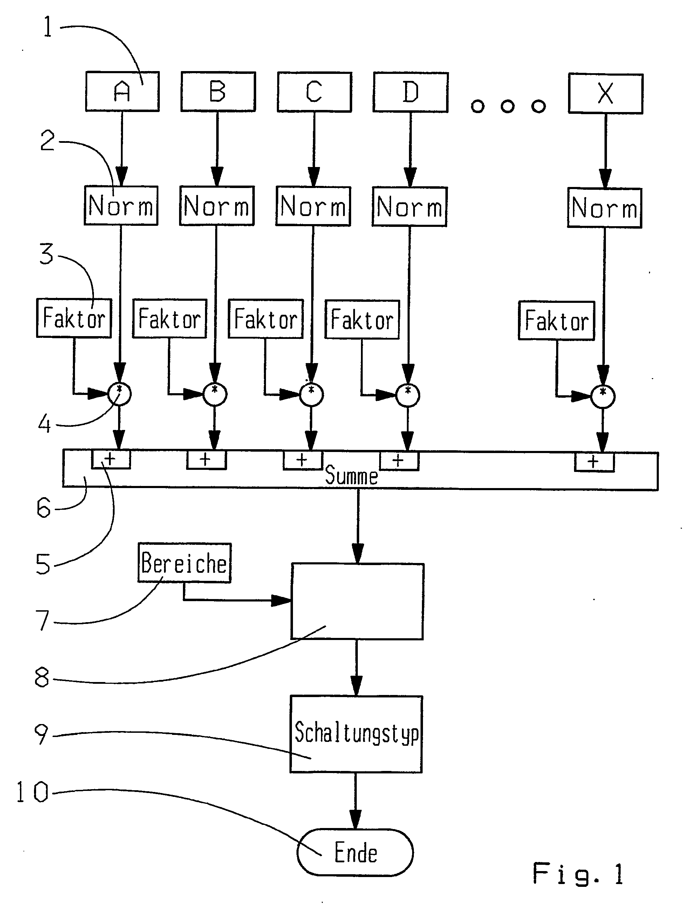

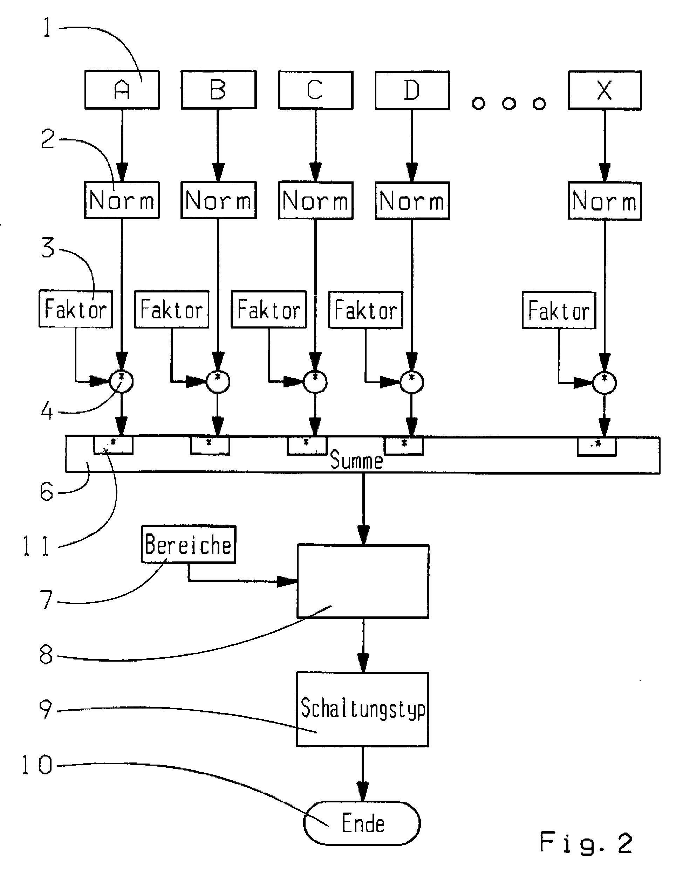

Wie Fig. 1 und Fig. 2 verdeutlichen, stehen beim Abarbeiten einer erfindungsgemäß gestalteten Programmschleife eines Getriebesteuerungsprogramms als Eingangsgrößen 1 eine Vielzahl von fahrsituationsrelevanten Größen A, B, C, D, X zur Verfügung.

Als Eingangsgrößen 1 für die beiden erfindungsmäßen Verfahrensvarianten werden summativ oder alternativ als Fahrsituationskenngrößen beispielsweise der Fahrpedalstellwinkel, die Betätigungssituation an einem Kick-Down-Schalter am Fahrpedal, ein Bremsbetätigungssignal über den Betätigungszustand der Betriebsbremse des Fahrzeugs, die Fahrzeuggeschwindigkeit oder dazu äquivalente Größen, die Fahrzeuglängsbeschleunigung, die Fahrzeugquerbeschleunigung, der Fahrwiderstand, der Fahrwegsteigungswinkel, der aktuell eingelegte Gang, der Sollgang des Getriebes für die vorliegende Fahrsituation, das aktuelle Motordrehmoment des Fahrzeugantriebsmotors und die Kupplungstemperatur als Indikator für den thermischen Belastungszustand der Kupplung genutzt. Als Kenngröße für den Fahrzeugzustand wird auch die Mitbewertung der aktuellen Fahrzeugmasse als vorteilhaft beurteilt.

Diese Eingangsgrößen 1 werden entweder mittels Sensoren in an sich bekannter Weise direkt gemessen oder aus gemessenen Hilfsgrößen berechnet. So ist es beispielsweise bekannt, aus der Getriebeabtriebsdrehzahl die Fahrgeschwindigkeit zu ermitteln.

Die Werte der Eingangsgrößen 1 werden dann in einem Berechnungsschritt 2 normiert, wobei diese Eingangsgröße durch einen jeweils zugeordneten und vorbestimmten Maximalwert dividiert wird. In den Fig. 1 und Fig. 2 ist der jeweilige Berechnungsschritt 2 auch durch die Bezeichnung "Norm" gekennzeichnet.

Anschließend werden bei beiden Verfahrensvarianten die Werte der normierten Eingangsgrößen jeweils mit einem vorzugsweise individuellen Gewichtungsfaktor 3 ("Faktor") multipliziert, welches in den beiden Figuren durch die jeweils zugeordnete Multiplizierungsstufe 4 verdeutlicht wird.

Bei den Gewichtungsfaktoren 3 handelt es sich um solche Größen, die den Fahrzeugtyp, den Getriebetyp, die Leistungscharakteristik des Antriebsmotors und/oder den Antriebsstrangaufbau charakterisieren. Die den Antriebsstrangaufbau charakterisierende Größe gibt dabei wieder, ob das Fahrzeug einen Front- oder Heckantrieb aufweist, oder mit einem Allradantrieb ausgestattet ist.

Durch diese Gewichtungsfaktoren 3 lassen sich die oben genannten normierten Eingangsgrößen derart gewichten, dass die Bedeutung einzelner Eingangsgrößen 1 zur Realisierung beispielsweise eines möglichst schnellen oder eines möglichst komfortablen Schaltvorgangs etwa überbetont, mittelmäßig bewertet oder gar weitgehend vernachlässigt werden.

Dazu ist vorgesehen, dass die Gewichtungsfaktoren 3 auch berücksichtigen können, ob das automatisierte Schaltgetriebe in einem Personenkraftfahrzeug, in einem Lastkraftwagen oder in einem anderen Nutzfahrzeug genutzt wird. In weiterer Ausgestaltung der Erfindung wird es als vorteilhaft beurteilt, wenn die Gewichtungsfaktoren 3 auch charakterisieren, ob ein Nutzfahrzeug als Ferntransportlastkraftwagen, Stadtlieferwagen, Reisebus oder als Geländefahrzeug ausgebildet ist.

Anschließend werden die normierten und gewichteten Werte der Eingangsgrößen 1 gemäß einer in Fig. 1 dargestellten ersten Verfahrensvariante in einem Additionsschritt 5 einer jeden Programmschleife zu einer Zwischengröße 6 aufsummiert, die dann einer Klassifikationsstufe 8 zugeführt wird. In dieser Klassifikationsstufe 8 wird der wie beschrieben berechnete Zwischenwert 6 einem von mehreren vorbestimmten und in einem Klassifikationsbereichsspeicher 7 ("Bereiche") abgespeicherten Klassifikationsbereichen zugeordnet. Jedem dieser Klassifikationsbereiche im Klassifikationsbereichsspeicher 7 ist ein Schaltablauftyp 9 zugeordnet, so dass der Ausgangswert der Klassifikationsstufe 8 einer von mehreren Schaltablauftypen ist.

Die Grenzen der Klassifizierungsbereiche zur Bestimmung des Schaltablauftyps 9 sind vorzugsweise abhängig gewählt vom Fahrzeugtyp, vom Getriebetyp, von der Leistungscharakteristik des Antriebsmotors und/oder vom Antriebsstrangaufbau.

Wie Fig. 2 verdeutlicht, können die normierten und gewichteten Werte der Eingangsgrößen 1 durch den Multiplikationsschritt auch miteinander multipliziert werden, um die Zwischengröße 6 zu bilden. Nicht dargestellt, aber ebenfalls durch die Erfindung erfasst ist eine dritte Variante, gemäß der die normierten und gewichteten Werte der Eingangsgrößen 1 miteinander multipliziert, addiert und/oder subtrahiert werden können.

Gemäß einer durch den unabhängigen Anspruch 1 definierten Verfahrensvariante sind den jeweiligen Schaltablauftypen 9 Aktuatorsteuerungsgrößen und/oder Regelungsalgorithmen zugeordnet, mit deren Hilfe die Aktuatoren des Getriebes und/oder der Kupplung angesteuert werden und so der Übersetzungsänderungsvorgang durchgeführt wird.

Nach der Bestimmung des Schaltablauftyps 9 ist die Abarbeitung einer gemäß Fig. 1 und Fig. 2 erfindungsgemäß ausgebildeten Programmschleife durch Erreichen des Ablaufschnitts 10 beendet, so dass mit einer erneuten Aufnahme der Bewertung der Eingangsgrößen 1 in einem erneuten ersten Verfahrensschritt ein gerade begonnener Übersetzungsänderungsvorgang weitergeführt oder hinsichtlich des Schaltkomforts und/oder der Dauer des Schaltvorgangs abgeändert werden kann.

Gemäß der durch den unabhängigen Anspruch 2 definierten zweiten Verfahrensvariante kann auch vorgesehen sein, dass die Zwischengröße 6 als diskreter Veränderungsfaktor genutzt wird, welcher mit Aktuatorsteuerungsgrößen und/oder Steuerungsalgorithmen zur Betätigungsansteuerung von wenigstens einem der Aktuatoren derart verknüpft wird, dass der Schaltvorgang durch Betätigung des wenigstens einen Aktuators erfolgt.

Eine solche Verknüpfung der Zwischengröße 6 im Sinne eines Veränderungsfaktors kann beispielsweise derart ablaufen, dass eine den Gradienten einer Aktuatorbetätigungsgeschwindigkeit beeinflussende Größe direkt verändert wird, so dass etwa ein Kupplungsschließvorgang einer mathematischen Funktion folgend schneller oder langsamer ablaufen kann. Es ist aber auch denkbar, dass diese Zwischengröße in dem Sinne als Veränderungsfaktor wirkt, dass ein zweites von zwei Schaltventilen geöffnet wird, mit dem die genannte Betätigungsgeschwindigkeit gegenüber einem vorherigen Wert beispielsweise konstant erhöht wird.

### Bezugszeichen

- 1: Eingangsgrößen A, B, C, D, X
- 2: Normierung der Eingangsgröße
- 3: Gewichtungsfaktor
- 4: Multiplikationsstufe
- 5: Additionsschritt
- 6: Zwischengröße
- 7: Klassifikationsbereichsspeicher
- 8: Klassifikationsstufe
- 9: Schaltungstyp
- 10: Ende der Programmschleife
- 11: Multiplikationsschritt

## Patentansprüche

1. Verfahren zur Steuerung eines automatisierten Schaltgetriebes, bei dem eine Anfahr- und/oder Schaltkupplung und/oder für die Auswahl sowie das Ein- und Auslegen der Getriebegänge bestimmte Getriebeelemente in Abhängigkeit von der jeweils vorliegenden und die Fahrsituation sowie den Leistungswunsch des Fahrers repräsentierende Größen mittels Aktuatoren betätigt werden, die von einer Steuerungs- und Regelungsvorrichtung angesteuert werden, **gekennzeichnet durch** folgende Verfahrensschritte:
- Erfassen von den Schaltvorgang beeinflussenden Eingangsgrößen;
- Normieren der Eingangsgrößen zu normierten Eingangsgrößen;
- Gewichtung der normierten Eingangsgrößen mit Gewichtungsfaktoren;
- Summieren und/oder Multiplizieren der normierten und gewichteten Eingangsgrößen zu einer Zwischengröße;
- Klassifizierung der Zwischengröße in einen von mehreren vorbestimmten Wertebereichen, die jeweils einen Schaltablauftyp repräsentieren und
- Durchführung des Schaltvorgangs **durch** Betätigung der Aktuatoren mit Hilfe der dem ermittelten Schaltablauftyp zugeordneten Aktuatorsteuerungsgrößen und/oder Regelungsalgorithmen.

2. Verfahren zur Steuerung eines automatisierten Schaltgetriebes, bei dem eine Anfahr- und/oder Schaltkupplung und/oder für die Auswahl sowie das Ein- und Auslegen der Getriebegänge bestimmte Getriebeelemente in Abhängigkeit von der jeweils vorliegenden und die Fahrsituation sowie den Leistungswunsch des Fahrers repräsentierende Größen mittels Aktuatoren betätigt werden, die von einer Steuerungs- und Regelungsvorrichtung angesteuert werden, **gekennzeichnet durch** folgende Verfahrensschritte:
- Erfassen von den Schaltvorgang beeinflussenden Eingangsgrößen;
- Normieren der Eingangsgrößen zu normierten Eingangsgrößen;
- Gewichtung der normierten Eingangsgrößen mit Gewichtungsfaktoren;
- Summieren und/oder Multiplizieren der normierten und gewichteten Eingangsgrößen zu einer Zwischengröße;
- Nutzung der Zwischengröße als Veränderungsfaktor, der mit Aktuatorsteuerungsgrößen und/oder Regelungsalgorithmen zur Betätigungsansteuerung von wenigstens einem der Aktuatoren verknüpft wird und
- Durchführung des Schaltvorgangs **durch** Betätigung des wenigstens einen Aktuators mit Hilfe der **durch** den Veränderungsfaktor angepassten Aktuatorsteuerungsgrößen und/oder Regelungsalgorithmen.

3. Verfahren nach Anspruch 1 oder 2, **dadurch gekennzeichnet, dass** als Eingangsgrößen additiv oder alternativ erfasst bzw. bestimmt werden:
der Fahrpedalstellwinkel, die Betätigungssituation an einem Kick-down-Schalter am Fahrpedal, ein Bremsbetätigungssignal über den Betätigungszustand der Betriebsbremse des Fahrzeugs, die Fahrzeuggeschwindigkeit oder dazu äquivalente Größen, die Fahrzeuglängsbeschleunigung, die Fahrzeugquerbeschleunigung, der Fahrwiderstand, der Fahrwegsteigungswinkel, der aktuell eingelegte Gang, der Sollgang des Getriebes für die vorliegende Fahrsituation, das aktuelle Motordrehmoment des Fahrzeugantriebsmotors, die Kupplungstemperatur als Indikator für den thermischen Belastungszustand der Kupplung und/oder die aktuelle Fahrzeugmasse.

4. Verfahren nach wenigstens einem der Ansprüche 1 bis 3, **dadurch gekennzeichnet, dass** die Gewichtungsfaktoren Größen sind, die den Fahrzeugtyp, den Getriebetyp, die Leistungscharakteristik des Antriebsmotors und/oder den Antriebsstrangaufbau charakterisieren.

5. Verfahren nach Anspruch 4, **dadurch gekennzeichnet, dass** die Gewichtungsfaktoren berücksichtigen, ob das automatisierte Schaltgetriebe in einem Personenkraftfahrzeug, in einem Lastkraftwagen oder einem anderen Nutzfahrzeug genutzt wird.

6. Verfahren nach wenigstens einem der Ansprüche 4 oder 5, **dadurch gekennzeichnet, dass** die Gewichtungsfaktoren charakterisieren, ob das Nutzfahrzeug als Femtransport-Lastkraftwagen, Stadtlieferwagen, Reisebus oder Geländefahrzeug ausgebildet ist.

7. Verfahren nach wenigstens einem der vorhergehenden Ansprüche, **dadurch gekennzeichnet, dass** die Gewichtungsfaktoren mit der jeweils zugeordneten normierten Eingangsgröße multipliziert werden.

8. Verfahren wenigstens einem der vorherigen Anspruche, **dadurch gekennzeichnet, dass** die Grenzen der Klassifizierungsbereiche zur Bestimmung des Schaltungstyps abhängig vom Fahrzeugtyp, vom Getriebetyp, von der Leistungscharakteristik des Antriebsmotors und/oder vom Antriebsstrangaufbau gewählt sind.

## Claims

1. Method for the control of an automated manual transmission, in which a starting and/or shift dutch and/or specific transmission elements are controlled by actuators for selection as well as engagement and disengagement of transmission gears, dependent on variables representing the driving situation as well as the driver's performance request, with the actuators being controlled by a control device, **characterized by** the following process steps:
- registration of input variables influencing the shifting process;
- standardization of the input variables;
- weighting of the standardized input variables by means of weighting factors;
- summation and/or multiplication of the standardized and weighted input variables to obtain an intermediate variable;
- classification of the intermediate variable in one of several predefined variables ranges, each of which represents a shifting-prooess type; and
- execution of the shifting process through activation of the actuators by means of the actuator control variables and/or control algorithms assigned to the shifting-process type determined.

2. Method for the control of an automated manual transmission, in which a starting and/or shift clutch and/or specific transmission elements are controlled by actuators for selection as well as engagement and disengagement of transmission gears, dependent on variables representing the driving situation as well as the driver's performance request, with the actuators being controlled by a control device, **characterized by** the following process steps:
- registration of input variables influencing the shifting process;
- standardization of the input variables;
- weighting of the standardized input variables by means of weighting factors;
- summation and/or multiplication of the standardized and weighted input variables to obtain an intermediate variable;
- use of the intermediate variable as change factor linked to actuator control variables and/or control algorithms for activation control of at least one of the actuators; and
- execution of the shifting process through activation of at least one actuator by means of the change-factor-adjusted actuator control variables and/or control algorithms.

3. Method according to claim 1 or 2, **characterized by** additive or alternative registration or determination of the following input variables:
gas-pedal actuating-angle; actuating situation on a gas-pedal-mounted kickdown switch; brake actuation signal for the actuating situation on the service brake of the vehicle; vehicle speed or equivalent variables; vehicle longitudinal acceleration; vehicle transversal acceleration; road resistance; angle of gradient; currently engaged gear; desired transmission gear for the current driving situation; current torque of the vehicle's driving engine; the dutch temperature as indicator of the thermal load condition of the clutch; and/or the current vehicle mass.

4. Method according to at least one of the claims 1 thru 3, **characterized in that** the weighting factors represent variables which characterize vehicle type, transmission type, the performance characteristics of the driving engine and/or the configuration of the driveline.

5. Method according to claim 4, **characterized in that** the weighting factors take into account whether the automated manual transmission is used in a passenger car, a truck, or in any other commercial vehicle.

6. Method according to at least one of the claims 4 or 5, characberized in that the weighting factors are indicative of whether the commercial vehicle is a long-distance truck, a city van, or an off-road vehicle.

7. Method according to at least one of the preceding **claims, characterized in that** the weighting factors are multiplied with their assigned standardized input variables.

8. Method according to at least one of the preceding claims, **characterized in that** the demarcation lines between the categories for determining the shifting type are selected in relation to vehicle type, transmission type, the performance characteristics of the driving engine and/or the configuration of the driveline.

## Revendications

1. Procédé de commande d'une boîte mécanique automatisée, dans laquelle un embrayage de démarrage et/ou un embrayage de changement de vitesses et/ou certains éléments de la boîte de vitesses destinés à la sélection et à l'engagement/désengagement des rapports sont actionnés en fonction des grandeurs respectivement présentes et représentant la situation de conduite et le souhait de puissance du conducteur à l'aide d'actionneurs qui sont commandés par un dispositif de commande et de réglage **caractérisé par** les opérations suivantes :
- Acquisition de grandeurs d'entrée influant sur le processus de changement de vitesses ;
- Normalisation des grandeurs d'entrée en grandeurs d'entrée normalisées;
- Pondération des grandeurs d'entrée normalisées avec des facteurs de pondération ;
- Addition et/ou multiplication des grandeurs d'entrée normalisées et pondérées en une grandeur intermédiaire ;
- Classification de la grandeur intermédiaire dans une plage de valeurs parmi d'autres qui représentent respectivement un type de déroulement de passage de vitesses et
- réalisation du changement de vitesse par actionnement des actionneurs à l'aide de grandeurs de commande d'actionneur associées au type de déroulement de passage de vitesses déterminé et/ou d'algorithmes de régulation.

2. Procédé de commande d'une boîte mécanique automatisée, dans laquelle un embrayage de démarrage et/ou un embrayage de changement de vitesses et/ou certains éléments de la boîte de vitesses destinés à la sélection et à l'engagement/désengagement des rapports sont actionnés en fonction des grandeurs respectivement présentes et représentant la situation de conduite et le souhait de puissance du conducteur à l'aide d'actionneurs qui sont commandés par un dispositif de commande et de réglage, **caractérisé par** les opérations suivantes :
- Acquisition de grandeurs d'entrée influant sur le processus de changement de vitesses ;
- Normalisation des grandeurs d'entrée en grandeurs d'entrée normalisées ;
- Pondération des grandeurs d'entrée normalisées avec des facteurs de pondération ;
- Addition et/ou multiplication des grandeurs d'entrée normalisées et pondérées en une grandeur intermédiaire;
- Utilisation de la grandeur intermédiaire comme un facteur de modification qui est associé à des grandeurs d'actionneur et/ou des algorithmes de régulation pour la commande d'actionnenment d'au moins un actionneur et
- réalisation du changement de vitesse par actionnement de l'au moins un actionneur à l'aide des grandeurs de commande d'actionneur et/ou algorithmes de régulation adaptés par le facteur de modification.

3. Procédé selon la revendication 1 ou 2, **caractérisé en ce que** en tant que grandeurs d'entrée sont acquises et/ou déterminées par addition ou alternativement les grandeurs suivantes :
l'angle de positionnement de la pédale d'accélérateur, la situation d'accionnement sur un contacteur kickdown sur la pédale d'accélérateur, un signal d'actionnement du frein sur l'état d'actionnement du frein de service du véhicule, la vitesse du véhicule ou des grandeurs équivalentes à celle-ci, l'accélération longitudinale du véhicule, l'accélération transversale du véhicule, la résistance à l'avancement, l'angle de pente de la chaussée, le rapport engagé, le rapport de consigne de la boîte de vitesses adapté à la situation de conduite de l'instant, le couple moteur momentané du moteur d'entraînement du véhicule, la température de l'embrayage en tant qu'indicateur pour l'état de charge thermique de l'embrayage et/ou la masse du véhicule momentanée.

4. Procédé selon au moins une des revendications 1 à 3, **caractérisé en ce que** les facteurs de pondération sont des grandeurs caractérisant le type de véhicule, le type de transmission, la caractéristique de puissance du moteur d'entraînement et/ou la configuration de la chaîne cinématique.

5. Procédé selon la revendication 4, **caractérisé en ce que** les facteurs de pondération permettent de tenir compte du fait si la boîte mécanique automatisée est utilisée dans une automobile, dans un poids lourd ou dans un autre type de véhicule industriel.

6. Procédé selon au moins une des revendications 4 ou 5, **caractérisé en ce que** les facteurs de pondération permettent de caractériser si le véhicule industriel est configuré comme poids lourd longue distance, véhicule de livraison urbain, autocar de tourisme ou véhicule tout-terrain.

7. Procédé selon au moins une des revendications précédentes, **caractérisé en ce que** les facteurs de pondération sont multipliées par la grandeur d'entrée normalisée respectivement associée.

8. Procédé selon au moins une des revendications précédentes, **caractérisé en ce que** les limites des plages de classification pour la détermination du type de changement de vitesse sont choisies en fonction du type de véhicule, du type de transmission, de la caractéristique de puissance du moteur d'entraînement et/ou de la configuration de la chaîne cinématique.
